(19) Europäisches Patentamt
European Patent Office
Office européen des brevets

(11) **EP 2 118 497 B1**

(12) **EUROPÄISCHE PATENTSCHRIFT**

(45) Veröffentlichungstag und Bekanntmachung des Hinweises auf die Patenterteilung:
**20.04.2011 Patentblatt 2011/16**

(21) Anmeldenummer: **08701519.4**

(22) Anmeldetag: **16.01.2008**

(51) Int Cl.:
**F04D 27/02** *(2006.01)*

(86) Internationale Anmeldenummer:
**PCT/EP2008/050452**

(87) Internationale Veröffentlichungsnummer:
**WO 2008/101752 (28.08.2008 Gazette 2008/35)**

(54) **VERFAHREN ZUR BESTIMMUNG DER ERMÜDUNG EINES PUMPENROTORS EINER TURBO-GASPUMPE**

METHOD FOR DETERMINING THE FATIGUE OF A PUMP ROTOR OF A GAS TURBOPUMP

PROCÉDÉ POUR DÉTERMINER LA FATIGUE D'UN ROTOR D'UNE TURBOPOMPE À GAZ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.02.2007 DE 102007009085**

(43) Veröffentlichungstag der Anmeldung:
**18.11.2009 Patentblatt 2009/47**

(73) Patentinhaber: **Oerlikon Leybold Vacuum GmbH 50968 Köln (DE)**

(72) Erfinder:
• **BLUMENTHAL, Roland**
**50374 Erftstadt (DE)**
• **FROITZHEIM, Michael**
**41539 Dormagen (DE)**
• **PALTEN, Thomas**
**50937 Köln (DE)**
• **BOHRY, Dieter**
**8200 Schaffhausen (CH)**
• **KIEFFER, Manfred**
**50389 Wesseling (DE)**

(74) Vertreter: **von Kreisler Selting Werner Deichmannhaus am Dom Bahnhofsvorplatz 1 50667 Köln (DE)**

(56) Entgegenhaltungen:
EP-A- 1 607 585      WO-A-00/70562
WO-A-02/071079      US-A- 4 112 747

## Beschreibung

Die Erfindung bezieht sich auf ein Verfahren zur Bestimmung der Ermüdung eines Pumpenrotors einer schnell drehenden Turbo-Gaspumpe.

Turbo-Gaspumpen und insbesondere Turbo-Molekularpumpen werden mit relativ hohen Drehzahlen von 10.000 - 100.000 U/min betrieben. Der Pumpenrotor der Gaspumpe unterliegt durch die hohen Zentrifugalkräfte, Temperatureinflüsse etc. einer mechanischen Ermüdung. Insbesondere bei Turbo-Gaspumpen sind zwischen dem Pumpenrotor und dem Pumpenstator enge Spalte vorgesehen, um eine möglichst hohe Förderleistung zu erhalten. Durch die Pumpenrotor-Ermüdung kommt es nach einer bestimmten Zeit zu einem Versagen des Pumpenrotors bzw. zu einer Kollision zwischen dem Pumpenstator und dem Pumpenrotor. Um dies zu vermeiden, wird der Pumpenrotor vor dem geschätzten Kollisions-Zeitpunkt ausgetauscht.

Es kann ein zeitlich konstantes Wartungsintervall vorgesehen werden, das nach einer bestimmten Zeit oder einer bestimmten Betriebsdauer eine Wartung bzw. einen Austausch des Pumpenrotors vorsieht.

Aus der Druckschrift EP 1 607 585 A1, die als nächstliegender Stand der Technik angesehen wird, ist ein Verfahren zur Diagnose des Ermüdungsversagens von Turboladern bekannt. Dabei wird die Drehzahl des Turboladers gemessen, daraus ein entsprechender Ermüdungswert errechnet und dieser Wert mit einem Soll-Grenzwert der Ermüdung verglichen.

Aus DE 101 51 682 A1 ist ein Verfahren bekannt, bei dem aus der absoluten Drehzahl und der Temperatur des Pumpenrotors ein dynamisches Wartungsintervall errechnet wird. Hierdurch wird die sogenannte Kriechbeanspruchung des Pumpenrotors erfasst und bei der Berechnung des dynamischen Wartungsintervalls berücksichtigt. Untersuchungen haben gezeigt, dass auf diese Weise alleine unter bestimmten Betriebsbedingungen ein praxisgerechtes dynamisches Wartungsintervall nicht ausreichend genau bestimmt werden kann.

Aufgabe der Erfindung ist es daher, ein Verfahren zur Bestimmung der Ermüdung des Pumpenrotors zu schaffen, das die Ermüdung des Pumpenrotors möglichst realitätsnah für alle tatsächlich auftretenden Betriebsbedingungen bestimmt.

Diese Aufgabe wird erfindungsgemäß gelöst mit den im Patentanspruch 1 angegebenen Merkmalen.

Gemäß dem erfindungsgemäßen Verfahren zur Bestimmung der Ermüdung des Pumpenrotors einer Turbo-Gaspumpe sind folgende Verfahrensschritte vorgesehen:

- Kontinuierliche Ermittlung der Rotor-Drehzahl (n) des Pumpenrotors,
- Ermitteln der lokalen Drehzahl-Maxima und -Minima eines betrachteten zeitlichen Drehzahl-Verlaufes,
- Zuordnen der Drehzahl-Maxima und -Minima zueinander zu Paaren,
- Ermitteln eines Paar-Ermüdungswertes (L) für jedes der Drehzahl-Paare, und
- Akkumulieren aller Paar-Ermüdungswerte (L) zu einem Gesamtermüdungswert ($L_{tot}$).

Versuche haben ergeben, dass unabhängig neben einer möglichen Kriechbeanspruchung die sogenannte Zyklusbeanspruchung erheblich in die Lebensdauer bzw. in die Ermüdung eines schnelldrehenden Metall-Bauteiles mit eingeht. Erst wenn die Zyklusbelastung zusätzlich erfasst wird, kann insbesondere die Gefahr von Brüchen an dem Pumpenrotor bei der Bestimmung der mechanischen Ermüdung des Pumpenrotors realistisch mit eingehen.

Zyklusbeanspruchung tritt bereits bei Beanspruchungen deutlich unterhalb der sogenannten Zugfestigkeit $R_m$ eines metallischen Werkstoffes auf, und häufig auch unterhalb der Streckgrenze $R_e$, die den Beginn der makroskopischen plastischen Verformung kennzeichnet. Der Grund für die Zyklusbeanspruchung liegt in der Wechselwirkung der Mikrostruktur des betreffenden Werkstoffes mit der zyklischen Spannungsbelastung. Auch unterhalb der Streckgrenze können mikroskopische mikroplastische Verformungen in dem Werkstoff auftreten. Diese können einerseits an lokalen Spannungskonzentrationen in dem Bauteil erfolgen, können aber auch in weicheren Gefügebereichen auftreten, beispielsweise in einem ausscheidungsgehärteten Werkstoff. Mikroskopische Verformungen können aber auch im Bereich einzelner Kristallite auftreten, die kristallografisch günstig zur Belastungsrichtung orientiert sind, so dass es hier lokal zu einer Abgleitung und damit zu einer plastischen Verformung kommen kann. Wenn diese Abgleitungen aus der Bauteiloberfläche heraustreten, kommt es zur mikroskopischen Stufenbildung, auch Intrusionen und Extrusionen genannt. Diese stellen Kerben dar, die zu einer örtlichen Spannungsüberhöhung führen. An dieser Stelle kann dann im Verlauf weiterer zyklischer Beanspruchungen ein Anriss auftreten, der so lange durch die zyklischen Beanspruchungen weiter getrieben wird, bis das Bauteil an dieser Stelle so geschwächt ist, dass ein Bauteilbruch auftritt.

Zur Erfassung und Abschätzung der Zyklusbeanspruchung ist es erforderlich, die Rotordrehzahl des Pumpenrotors zu beobachten und das Ende bzw. den Abschluss eines Drehzahlzyklus zu erfassen. Unter einem Drehzahlzyklus ist vorliegend ein zeitliches Intervall zu verstehen, an dessen Anfang und an dessen Ende sich das Vorzeichen der Beschleunigung des Pumpenrotors geändert hat, der zeitliche Verlauf der Pumpenrotor-Beschleunigung also einen Nulldurchgang aufweist. Ein Drehzahlzyklus dauert vorzugsweise von einem Nulldurchgang des zeitlichen Beschleunigungsverlaufes bis zum folgenden Nulldurchgang. Unter einem Drehzahlzyklus kann alternativ ein zeitliches Intervall verstanden werden, das mit dem Beginn einer positiven Beschleunigung anfängt und mit dem Ende einer sich anschließenden negativen Beschleunigung endet.

Um die sogenannte Zyklusbeanspruchung des Pumpenrotors ermitteln zu können, wird die Rotor-Drehzahl ($n$) des Pumpenrotors kontinuierlich ermittelt. Auf diese Weise wird ein zeitlicher Drehzahl-Verlauf erstellt, für den die jeweiligen lokalen Drehzahl-Maxima und Drehzahl-Minima ermittelt werden. Ein Drehzahl-Maximum bzw. -Minimum ist jeweils ein Drehzahl-Extremwert, nach dessen Erreichen sich das Vorzeichen der Beschleunigung ändert. Nach Erreichen eines Drehzahl-Maximums verringert sich also die Drehzahl, nach Erreichen eines Drehzahl-Minimums erhöht sich also die Drehzahl. Der betrachtete Zeitraum kann sich auf einen einzigen Zyklus beziehen, der von einem Maximum bis zu einem Minimum oder von einem Minimum bis zu einem Maximum dauert, kann vom Anlauf bis zum Stopp des Pumpenrotors dauern, kann sich auf einen festgelegten Zeitraum oder auf eine festgelegte Anzahl von Maxima und Minima beziehen.

Für den betrachteten Zeitraum des Drehzahl-Verlaufes werden die Drehzahl-Maxima und -Minima jeweils paarweise einander zugeordnet. Für die Zuordnung der Drehzahl-Maxima und -Minima zueinander zur Generierung von Maximum-Minimum-Paaren können verschiedene Regeln oder Algorithmen angewendet werden.

Aus jedem Drehzahl-Maximum-Minimum-Paar wird ein Paar-Ermüdungswert $L$ ermittelt, Schließlich werden alle ermittelten Paar-Ermüdungswerte $L$ zu einem Gesamtermüdungswert $L_{tot}$ akkumuliert.

Für einen komplexen Drehzahlverlauf werden also zunächst nach einer festgelegten Regel alle Drehzahl-Paare bestimmt, für jedes Drehzahl-Paar ein Ermüdungswert errechnet und die errechneten Ermüdungswerte zu einem Gesamtermüdungswert akkumuliert. Der auf diese Weise ermittelte Gesamtermüdungswert gibt also die Gesamtermüdung aufgrund der Zyklusbeanspruchung des Pumpenrotors in dem betrachteten Zeitraum an. Auf diese Weise wird die Möglichkeit geschaffen, ein Wartungsintervall zu berechnen, in dessen Berechnung die Zyklusbeanspruchung des Pumpenrotors mit eingeht. Ein Wartungsintervall lässt sich so mit hoher Sicherheit und erheblich genauer bestimmen, so dass ermüdungsbedingte Schäden einerseits und große Sicherheitsabschläge für die Ermittlung des Wartungsintervalls andererseits vermieden werden können.

Vorzugsweise geht eine charakteristische mechanische Spannung des jeweiligen Drehzahl-Paares in die Ermittlung des Verschleißwertes $L$ ein. Die charakteristische Spannung des Drehzahl-Paares kann beispielsweise das arithmetische Mittel der beiden mechanischen Spannungen sein, die durch die Fliehkräfte in dem betrachteten Bauteil bei den beiden Drehzahlen des Drehzahl-Maximum-Minimum-Paares auftreten. Auf diese Weise gehen das Drehzahlniveau und der Drehzahlhub in die Ermittlung des Verschleißwertes mit ein.

Vorzugsweise wird die Rotor-Drehzahl in konstanten Zeitintervallen ermittelt. Unter kontinuierlicher Ermittlung der Rotor-Drehzahl im vorliegenden Fall ist also auch eine Ermittlung in konstanten diskreten Zeitintervallen zu verstehen. Ein Zeitintervall kann eine oder mehrere Sekunden betragen. Dies ist in der Regel ausreichend, da die Drehzahl von beispielsweise Turbo-Gaspumpen nicht ständig geändert wird und insbesondere nicht sehr schnell geändert werden kann. Durch die Einführung eines angemessenen Zeitintervalls für die Ermittlung der Rotor-Drehzahl wird die Belastung der hiermit befassten Rechner-Hardware reduziert.

Gemäß einer bevorzugten Ausgestaltung der Erfindung wird der Paar-Ermüdungswert durch ein mindestens quadratisches, besonders bevorzugt ein kubisches Polynom bestimmt. Hiermit kann ein realitätsnaher Ermüdungswert errechnet werden, der die angefallene Beanspruchung ausreichend genau angibt. Alternativ kann der Paar-Ermüdungswert jedoch auch einfacher ermittelt werden, wenn eine gewisse erhöhte Ungenauigkeit in Kauf genommen wird.

Vorzugsweise wird ein Erschöpfungssignal ausgegeben, sobald der Gesamtermüdungswert einen Gesamtermüdungs-Grenzwert übersteigt. Der Gesamtermüdungs-Grenzwert kann beispielsweise so gewählt werden, dass noch eine Reserve bis zum Ende des Wartungsintervalls bleibt, so dass die Wartung mit einem Vorlauf von mehreren Tagen oder Wochen vorbereitet werden kann. Selbstverständlich können mehrere Gesamtermüdungs-Grenzwerte vorgesehen werden, die gegen Ende eines Wartungsintervalls verschiedene Warnungen veranlassen.

Im Folgenden wird unter Bezugnahme auf die Zeichnungen ein Ausführungsbeispiel der Erfindung näher erläutert.

Es zeigen:

Fig. 1   ein Diagramm, das den Zusammenhang zwischen der einer jeweiligen Drehzahl entsprechenden Spannungs-amplitude $\sigma_n$ und der Anzahl der Zyklen bis zur Zerstörung darstellt (Wöhler- Diagramm),

Fig. 2   eine schematische Darstellung des Zusammenhangs zwischen Drehzahl-Zyklus und dem Spannungs-Zyklus mit der Zuordnung von $\sigma_a$ und weiterer spezifischer Spannungskennwerte zur Drehzahl, und

Fig. 3   ein möglicher zyklischer Betriebsablauf z.B. einer Turbo-Gaspumpe, dargestellt als Drehzahl $n$ über der Zeit $t$ zur Definition verschiedener Parameter.

Beim Betrieb einer Turbo-Gaspumpe und insbesondere beim Betrieb einer Turbomolekular-Pumpe treten durch die hohen Drehzahlen und die dadurch hohen Fliehkräfte insbesondere im Bereich des Pumpenrotors hohe radiale mechanische Belastungen in Form von Spannungen auf. Angesichts der möglichst kleinen Spalte zwischen dem Pumpenstator und dem Pumpenrotor kann es schon bei relativ kleinen mechanischen Veränderungen des Pumpenrotors zu einer Kollision zwischen dem Pumpenrotor und dem Pumpenstator kommen.

Neben dem Einfluss der reinen Drehzahl und der Rotortemperatur, der in DE 101 51 682 A1 beschrieben ist und die sogenannte Kriechbeanspruchung beschreibt, geht auch die sogenannte Zyklusbeanspruchung in die mechanische Ermüdung des Pumpenrotors ein. Versuche haben ergeben, dass die Material-Ermüdung durch Kriechen einerseits und durch sogenannte Zyklusbeanspruchung andererseits in einem in der Praxis üblichen Belastungsbereich von Spannung und Temperatur weitgehend unabhängig voneinander ist. Die zeitliche Aufeinanderfolge der Kriechbeanspruchung und der Zyklusbeanspruchung ist bei der Betrachtung der Gesamtermüdung eines Bauteils nicht von großer Bedeutung, so dass beide Beanspruchungen nach ihrer Ermittlung miteinander addiert werden können.

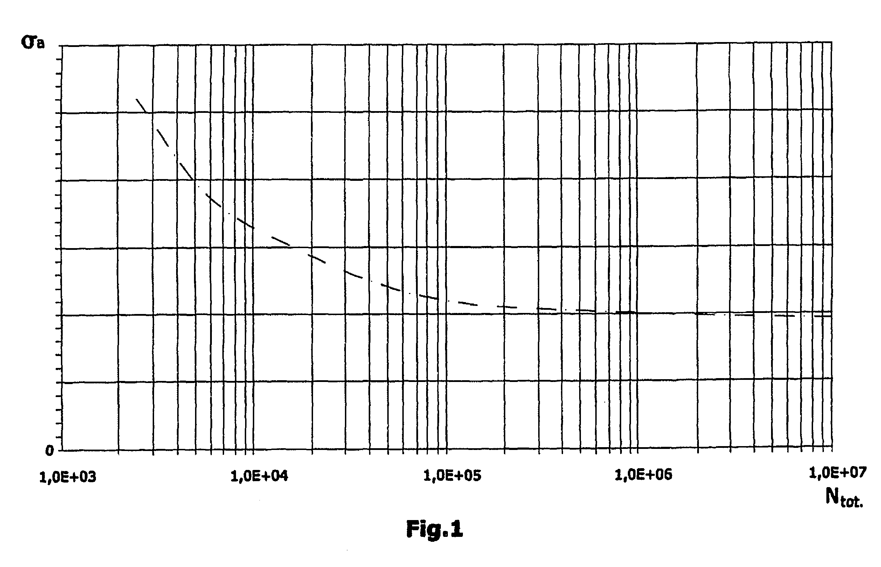

In der Fig. 1 ist der Zusammenhang zwischen der Spannungsamplitude $\sigma_c$ auf der Ordinate und der Anzahl der korrespondierenden Drehzahlzyklen bis zur Zerstörung auf der Abszisse dargestellt. Hieraus geht deutlich hervor, dass es einen Grenzwert für $\sigma_n$ gibt, unterhalb dessen die Anzahl der ertragbaren Zyklen bis zum Bruch gegen unendlich strebt. Der Zusammenhang zwischen Drehzahl und Spannung ist durch Werkstoff, Form, Masse etc. des Pumpenrotors gegeben, so dass mit beiden Größen alternativ gerechnet werden kann. Im Folgenden wird exemplarisch die mechanische Spannung zur Ermittlung der Ermüdung verwendet.

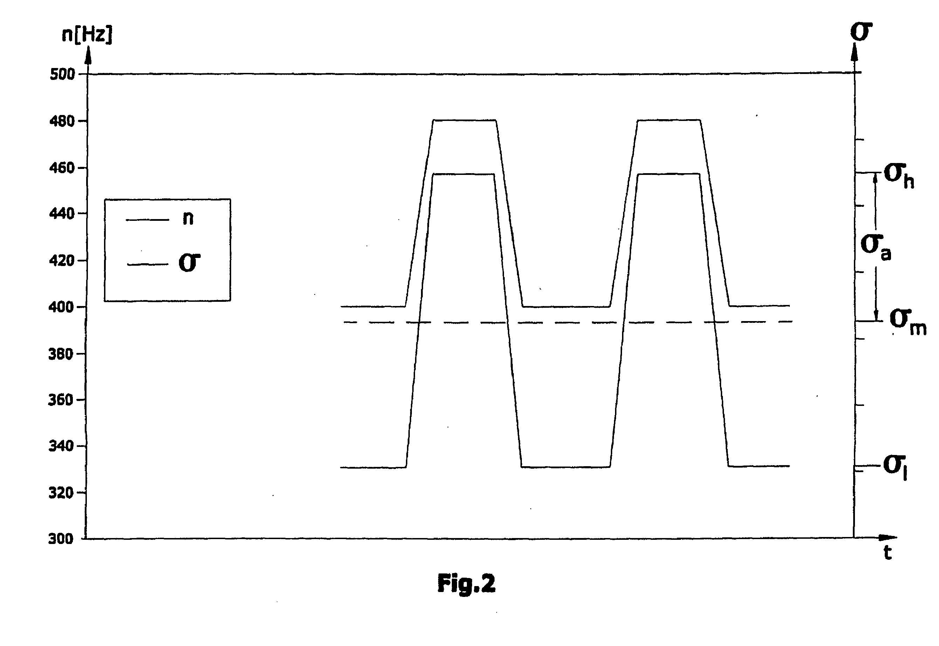

In der Fig. 2 ist zur besseren Verständlichkeit der folgenden Algorithmen beispielhaft ein Zyklusverlauf in Abhängigkeit von der Pumprotordrehzahl n und der korrespondierenden Spannung $\sigma$ über der Zeit t dargestellt.

Für jede Zyklus-Variante einer Turbo-Gaspumpe wird eine Kurve entsprechend der Fig. 1 bzw. eine ganze Kurvenschar für verschiedene Beanspruchungen experimentell ermittelt. Aus diesen Kurven lassen sich die konstanten Faktoren eines Polynoms bestimmen, mit dem für jede Zyklus-Variante gemäß Fig. 2 bestimmt werden kann, wie viele gleichförmige Zyklen bis zur Zerstörung insgesamt anfallen würden:

$$\log(N_{tot}) = \alpha_0 + \beta_1 \cdot \sigma_m + \beta_2 \cdot \sigma_m^2 + \beta_3 \cdot \sigma_m^3 + \gamma_1 \cdot \sigma_a + \gamma_2 \cdot \sigma_a^2 + \gamma_2 \cdot \sigma_a^3$$

mit

$N_{tot} =$    Anzahl der gleichförmigen Zyklen (Spannungshübe) bis zur Zerstörung

$$\sigma_m = \frac{\sigma_h + \sigma_l}{2} = \text{mittlere Spannung}$$

$$\sigma_a = \sigma_h - \sigma_m = \sigma_m - \sigma_l = \text{Spannungshub / 2} = \text{Amplitudenspannung}$$

$$\sigma_h = \sigma_{ref.zyklus} \cdot \left( \frac{\max(n_{z,1}; n_{z,2})}{n_{ref.zyklus}} \right)^2 = \text{Oberspannung; } n_{z,1} \text{ und } n_{z,2} \text{ sind die einander}$$

zugeordneten Drehzahl-Werte

$$\sigma_l = \sigma_{ref.\,zyklus} \cdot \left(\frac{\min(n_{z,1};n_{z,2})}{n_{ref.\,zyklus}}\right)^2 = \text{Unterspannung;} \quad \sigma_{ref} \text{ ist die Spannung im Rotor}$$

$$\text{bei der Drehzahl } n_{ref}$$

Die Koeffizienten $\beta_1$ - $\beta_3$ und $\gamma_1$ - $\gamma_3$ sowie $\alpha_o$ werden durch Interpolation, z.B. durch die Methode der Summe der Fehlerquadrate, aus experimentell ermittelten Wertetripeln $N_{tot}$, $\sigma_m$, $\sigma_n$ bestimmt.

Wie zu erkennen ist, gehen in die Berechnung über die mechanischen Spannungen die mittlere Spannung $\sigma_m$ und der Spannungshub $\sigma_n$ -2 ein.

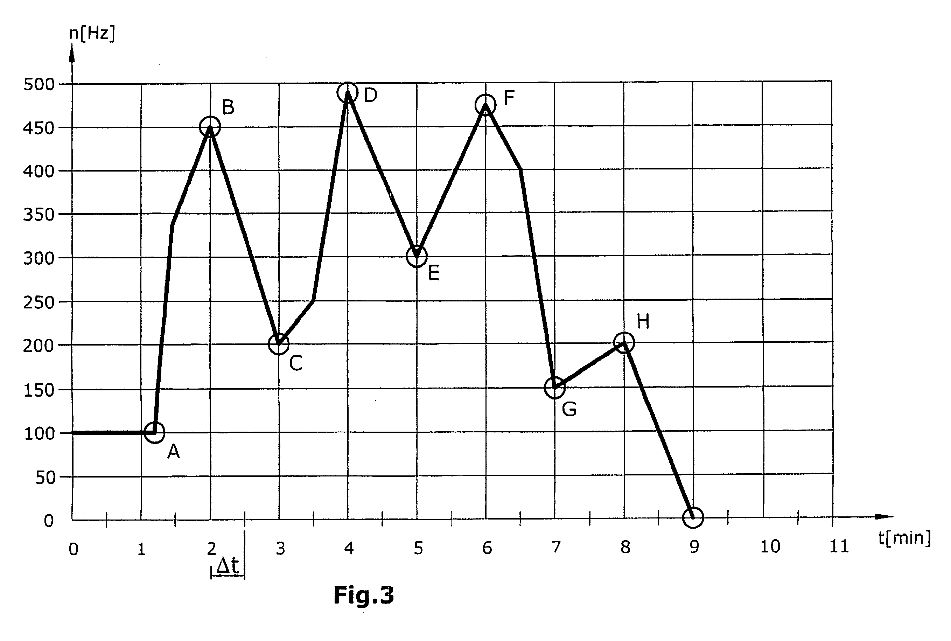

In der Figur 3 ist exemplarisch ein zeitlicher Drehzahl-Verlauf aus der Praxis dargestellt. Die kontinuierliche Ermittlung der Rotor-Drehzahl n erfolgt in konstanten Zeitintervallen $\Delta t$. Selbstverständlich kann $\Delta t$ erheblich kürzer ausfallen, als vorliegend dargestellt, um eine engmaschigere Drehzahl-Ermittlung zu realisieren und hieraus ein genaueres Bild des zeitlichen Drehzahl-Verlaufes zu erhalten. Nach Unterschreiten einer Mindestdrehzahl bzw. einer Mindestdrehfrequenz, beispielsweise von 10 Hz, wird eine Ermüdungsbestimmung vorgenommen.

Sobald sich das Vorzeichen der Beschleunigung ändert, wird das soeben durchschrittene Drehzahl-Maximum bzw. -Minimum als lokales Maximum bzw. Minimum gespeichert. Ist die gespeicherte Drehzahl ein lokales Maximum, wird sie in einem Maximum-Speicher gespeichert. Ist die gespeicherte Drehzahl ein lokales Minimum, wird sie in einem Minimum-Speicher gespeichert. Im vorliegenden Beispiel werden auf diese Weise an den Punkten B, D, F, H Maxima und an den Punkten A, C, E, G Minima festgestellt.

Um die zyklische Belastung zu erfassen, werden nicht zeitlich benachbarte Maxima-Minima-Paare gebildet, sondern werden über den betrachteten Zeitraum Extremwert-Paare gebildet. Das erste Paar besteht aus dem kleinsten Drehzahl-Minimum und dem größten Drehzahl-Maximum, also vorliegend aus dem Paar A-D. Das zweite Paar besteht aus den verbleibenden Extrem-Werten G, F, das dritte Paar aus den Werten C und B etc.. Diese Vorgehensweise hat sich als bewährtes Verfahren etabliert.

Drehzahl-Werte, die in der zeitlichen Abfolge ein Minimum darstellen und aufgrund der Wertepaarbildung als Maximum verwendet werden müssten, stellen somit kein echtes Maximum dar und fallen aus der Gesamtwertung heraus. Gleiches gilt entsprechend für unechte Minima. Im vorliegenden Fall ist dies für das Paar E, H der Fall.

Der für die Ermüdungs-Bestimmung betrachtete Zeitraum kann ein kompletter Betriebszyklus sein, also vom letzten Einschalten der Gaspumpe bis zum darauf folgenden Ausschalten der Gaspumpe dauern. Der betrachtete Zeitraum kann jedoch auch das komplette Pumpenleben sein. Der betrachtete Zeitraum wird in der Praxis durch die verfügbare Rechner- und Speicherkapazität begrenzt sein. Bei einer Betrachtung des gesamten bisherigen Pumpenlebens wird der gesamte akkumulierte Verschleißwert jedes Mal komplett neu errechnet.

Für jedes Maximum-Minimum-Drehzahl-Paar wird mit der nach $N_{tot}$ aufgelösten Formel ein Paar-Ermüdungswert L ermittelt nach der Formel:

$$L = 1 / N_{tot}$$

Der Gesamtermüdungswert $L_{tot}$ ergibt sich dann aus der Summe der Paar-Ermüdungswerte L:

$$L_{tot} = \Sigma\, 1 / N_{tot\,i} = \Sigma L_i$$

Hierzu kann ferner ständig der akkumulierte Kriech-Ermüdungswert hinzu addiert werden. Der akkumulierte Zyklus-Ermüdungswert $L_{tot}$ oder der kombinierte Kriech-Zyklus-Ermüdungswert kann kontinuierlich mit einem Gesamtermüdungs-Grenzwert $L_{max}$ verglichen werden. Der Grenzwert $L_{max}$ ist kleiner als 1,0, da bei einem Grenzwert $L_{max}$=1,0 ein Versagen zu erwarten ist. Sobald der Gesamtermüdungswert $L_{tot}$ den Grenzwert $L_{max}$ übersteigt, wird ein entsprechendes Erschöpfungssignal ausgegeben.

**Patentansprüche**

1. Verfahren zur Bestimmung der Ermüdung eines Pumpenrotors einer Turbo-Gaspumpe, mit den Verfahrensschritten:

   • Kontinuierliche Ermittlung der Rotor-Drehzahl ($n$) des Pumpenrotors,
   • Ermitteln der lokalen Drehzahl-Maxima und -Minima eines betrachteten zeitlichen Drehzahl-Verlaufes,
   • Zuordnen der Drehzahl-Maxima und -Minima zueinander zu Paaren,
   • Ermitteln eines Paar-Ermüdungswertes ($L$) für jedes der Drehzahl-Paare, und
   • Akkumulieren aller Paar-Ermüdungswerte ($L$) zu einem Gesamtermüdungswert ($L_{tot}$).

2. Verfahren zur Bestimmung der Ermüdung eines Pumpenrotors einer Turbo-Gaspumpe nach Anspruch 1, **dadurch gekennzeichnet, dass** mindestens eine charakteristische Spannung des Drehzahl-Paares in die Ermittlung des Paar-Ermüdungswertes (L) eingeht.

3. Verfahren zur Bestimmung der Ermüdung eines Pumpenrotors einer Turbo-Gaspumpe nach Anspruch 2, **dadurch gekennzeichnet, dass** eine charakteristische Spannung die mittlere Spannung des jeweiligen Drehzahl-Paares ist.

4. Verfahren zur Bestimmung der Ermüdung eines Pumpenrotors einer Turbo-Gaspumpe nach einem der Ansprüche 1-3, **dadurch gekennzeichnet, dass** ein lokales Drehzahl- Maximum bzw. -Minimum jeweils ein Nulldurchgang des zeitlichen Verlaufs der Rotor-Beschleunigung ist.

5. Verfahren zur Bestimmung der Ermüdung eines Pumpenrotors einer Turbo-Gaspumpe nach einem der Ansprüche 1-4, **dadurch gekennzeichnet, dass** die Ermittlung der Rotordrehzahl ($n$) in konstanten Zeitintervallen ($\Delta t$) erfolgt.

6. Verfahren zur Bestimmung der Ermüdung eines Pumpenrotors einer Turbo-Gaspumpe nach einem der Ansprüche 1-5, **dadurch gekennzeichnet, dass** der Paar-Ermüdungswert ($L$) durch ein mindestens quadratisches, besonders bevorzugt mindestens kubisches Polynom bestimmt wird.

7. Verfahren zur Bestimmung der Ermüdung eines Pumpenrotors einer Turbo-Gaspumpe nach einem der Ansprüche 1-6, **dadurch gekennzeichnet, dass** ein Erschöpfungssignal ausgegeben wird, sobald der Gesamtermüdungswert ($L_{tot}$) einen Gesamtermüdungs-Grenzwert ($L_{max}$) übersteigt.

8. Verfahren zur Bestimmung der Ermüdung eines Pumpenrotors einer Turbo-Gaspumpe nach einem der Ansprüche 1-7, **dadurch gekennzeichnet, dass** kontinuierlich Kriech-Ermüdungswerte aus der Rotordrehzahl ($n$) und der Rotortemperatur ermittelt und in dem Gesamtermüdungswert ($L_{tot}$) akkumuliert werden.


**Claims**

1. A method for determining the fatigue of the pump rotor of a gas turbopump, comprising the following method steps:

   • continuous determination of the rotational speed ($n$) of the pump rotor,
   • determination of the local rotational speed maxima and minima of a temporal rotational speed profile under consideration,
   • association of the rotational speed maxima and minima with each other to form pairs,
   • determination of a pair fatigue value ($L$) for each of the rotational speed pairs, and
   • accumulation of all pair fatigue values ($L$) to form a total fatigue value ($L_{tot}$).

2. The method for determining the fatigue of the pump rotor of a gas turbopump of claim 1, **characterized in that** at least one characteristic stress of the rotational speed pairs is included in the determination of the pair fatigue value ($L$).

3. The method for determining the fatigue of the pump rotor of a gas turbopump of claim 2, **characterized in that** a characteristic stress is the mean stress of a respective rotational speed pair.

4. The method for determining the fatigue of the pump rotor of a gas turbopump of one of claims 1-3, **characterized in that** a local rotational speed maximum or minimum is a zero crossing of the temporal profile of the rotor acceleration, respectively.

**5.** The method for determining the fatigue of the pump rotor of a gas turbopump of one of claims 1-4, **characterized in that** the determination of the rotational speed ($n$) of the rotor is effected at constant time intervals ($\Delta t$).

**6.** The method for determining the fatigue of the pump rotor of a gas turbopump of one of claims 1-5, **characterized in that** the pair fatigue value (L) is determined by a polynomial that is at least square, more preferably at least cubic.

**7.** The method for determining the fatigue of the pump rotor of a gas turbopump of one of claims 1-6, **characterized in that** a fatigue signal is output as soon as the total fatigue value ($L_{tot}$) exceeds a total fatigue limit value ($L_{max}$).

**8.** The method for determining the fatigue of the pump rotor of a gas turbopump of one of claims 1-7, **characterized in that** creep fatigue values are continuously determined from the rotational speed ($n$) of the rotor and the rotor temperature and are continuously accumulated in the total fatigue value ($L_{tot}$).

**Revendications**

**1.** Procédé pour déterminer la fatigue du rotor d'une turbopompe à gaz, comprenant les étapes suivantes:

- déterminer en continu la vitesse (n) du rotor de la pompe,
- déterminer les maximums et les minimums locaux de vitesse d'une caractéristique temporelle de vitesse observée,
- associer les maximums et les minimums de vitesse, l'un à l'autre, pour former des paires,
- déterminer une valeur de fatigue de paire (L) pour chaque paire de vitesses, et
- accumuler toutes valeurs de fatigue de paire (L) pour obtenir une valeur de fatigue totale ($L_{tot}$).

**2.** Procédé pour déterminer la fatigue du rotor d'une turbopompe à gaz, selon la revendication 1, **caractérisé en ce qu'**au moins une contrainte caractéristique de ladite paire de vitesses est incorporée dans la détermination de la valeur de fatigue de paire (L).

**3.** Procédé pour déterminer la fatigue du rotor d'une turbopompe à gaz, selon la revendication 2, **caractérisé en ce qu'**une contrainte caractéristique est la contrainte moyenne d'une paire de vitesses respective.

**4.** Procédé pour déterminer la fatigue du rotor d'une turbopompe à gaz, selon l'une quelconque des revendications 1 à 3, **caractérisé en ce qu'**un minimum ou un maximum local de vitesse, respectivement, est un passage par zéro de la caractéristique temporelle de l'accélération du rotor.

**5.** Procédé pour déterminer la fatigue du rotor d'une turbopompe à gaz, selon l'une quelconque des revendications 1 à 4, **caractérisé en ce que** la détermination de la vitesse du rotor (n) est effectuée dans des intervalles constantes ($\Delta t$).

**6.** Procédé pour déterminer la fatigue du rotor d'une turbopompe à gaz, selon l'une quelconque des revendications 1 à 5, **caractérisé en ce que** la valeur de fatigue de paire (L) est déterminée par un polynôme au moins carré, de préférence au moins cubique.

**7.** Procédé pour déterminer la fatigue du rotor d'une turbopompe à gaz, selon l'une quelconque des revendications 1 à 6, **caractérisé en ce qu'**un signal de fatigue est fourni dès que la valeur de fatigue totale ($L_{tot}$) dépasse une valeur limite de fatigue totale ($L_{max}$).

**8.** Procédé pour déterminer la fatigue du rotor d'une turbopompe à gaz, selon l'une quelconque des revendications 1 à 7, **caractérisé en ce que** des valeurs de fatigue-fluage sont continument déterminées de la vitesse du rotor (n) et de la température du rotor et sont accumulées dans ladite valeur de fatigue totale ($L_{tot}$).

Fig.1

**Fig.2**

EP 2 118 497 B1

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1607585 A1

- DE 10151682 A1